# EUROPÄISCHE PATENTANMELDUNG

(11) **EP 4 163 052 A1**
(43) Veröffentlichungstag der Anmeldung: **12.04.2023**
(21) Anmeldenummer: 22196472.9
(22) Anmeldetag: 20.09.2022
(51) Int. Cl.: B23P 19/06, F16B 37/06, B21D 28/28, B21J 15/02, B21J 15/36

(54) **VORRICHTUNG ZUR BEFESTIGUNG EINES FUNKTIONSELEMENT AN EINEM ABSCHNITT EINES WERKSTÜCKS**

(30) Priorität: 08.10.2021 DE 102021126167
(71) Anmelder: Profil Verbindungstechnik GmbH & Co. KG, 61381 Friedrichsdorf (DE)
(72) Erfinder: JENE, Tobias, 61381 Friedrichsdorf (DE); DIEHL, Oliver, 61250 Usingen (DE); BECKER, Christoph, 35305 Grünberg (DE); MORDELT, André, 65934 Frankfurt a. M. (DE); BEUTLER, Maik, 35510 Pohl-Göns (DE)
(74) Vertreter: Manitz Finsterwald Patent- und Rechtsanwaltspartnerschaft mbB

(57) **Zusammenfassung**

Die vorliegende Erfindung betrifft eine Vorrichtung zur Befestigung eines Funktionselements (20) an einem Abschnitt (12) eines Werkstücks (10) und/oder zur Umformung eines Abschnitts des Werkstücks, umfassend eine Stützeinrichtung (16) zur Abstützung des Werkstücks, wobei der Werkstückabschnitt eine der Stützeinrichtung zugewandte erste Oberfläche (12a) und eine der Stützeinrichtung abgewandte zweite Oberfläche aufweist. Die Stützeinrichtung umfasst ein erstes Stützelement (16a) mit einer ersten Werkstückstützfläche, (18a) die der ersten Oberfläche zugeordnet ist, und ein zweites Stützelement (16b) mit einer von der ersten Werkstückstützfläche weg weisenden zweiten Werkstückstützfläche (18b), die einer Abstützfläche zugeordnet ist. Das erste und das zweite Stützelement (16a, 16b) sind mittels einer Spreizeinrichtung (13) derart relativ zueinander bewegbar, dass die erste und die zweite Werkstückstützfläche (18a, 18b) in einer Axialrichtung voneinander weg bewegbar sind, insbesondere wobei sich die Axialrichtung senkrecht zu der ersten und/oder zweiten Werkstückstützfläche erstreckt.

## Beschreibung

Die vorliegende Erfindung betrifft eine Vorrichtung zur Befestigung eines Funktionselements an einem Abschnitt eines Werkstücks und/oder zur Umformung eines Abschnitts des Werkstücks.

Häufig ist es erforderlich, an einem Werkstück weitere Komponenten zu befestigen. Eine direkte Befestigung der Komponenten ist in manchen Fällen nicht oder nur unter vergleichsweise großem Aufwand möglich. In solchen Fällen werden an dem Werkstück zunächst Funktionselemente fixiert, die dann als Befestigungspunkte für die Komponenten dienen. Beispielsweise ist es im Automobilbau oft erforderlich, an einem Blechteil ein Mutterelement zu befestigen, das zusammen mit einer passenden Schraube die Herstellung einer Schraubverbindung ermöglicht. In manchen Fällen ist es auch gewünscht, das Werkstück mit einem Bolzenelement zu versehen, das wiederum als Verankerungspunkt dient.

Es sind grundsätzlich eine Reihe von Verfahren bekannt, mit denen derartige Funktionselemente an ebenen Bauteilen oder Werkstücken befestigt werden können. Hierbei wird das Bauteil oder Werkstück in der Regel auf eine flache Matrize oder Unterstützungsfläche aufgelegt und das Befestigungselement herangeführt und mit dem Werkstück verbunden. Es gibt beispielsweise Einpresselemente, die sich dadurch auszeichnen, dass sie beim Anbringen an dem Werkstück zumindest nicht absichtlich verformt werden, sondern das Werkstück wird verformt und in Eingriff mit Formmerkmalen des Einpresselements gebracht, wobei das Einpresselement auspresssicher an dem Werkstück, beispielsweise an einem Blechteil, befestigt wird. Es sind aber auch Nietelemente bekannt, bei denen das Element bei der Anbringung am Blechteil absichtlich verformt wird, meistens um ein Nietbördel auszubilden, wodurch das Blechteil zwischen dem Nietbördel und einem Flanschteil fixiert wird, um auch hier eine auspresssichere Verbindung zu erreichen.

Sowohl Einpress- als auch Nietelemente kennt man ferner als selbststanzende Elemente. Die Bezeichnung selbststanzend ist so zu verstehen, dass das entsprechende Element im Zuge des Befestigungsprozesses sein eigenes Loch in das Werkstück stanzt. Die dafür erforderliche Kraft wird beispielsweise von einer Presse erzeugt. Dabei wird das selbststanzende Element gegen das Werkstück gepresst, während sich dieses auf der dem Element abgewandten Seite auf einer entsprechenden Matrize oder Fläche abstützt.

Zwar sind selbststanzende Elemente oft mit Kostenvorteilen verbunden, da das Werkstück nicht vorgelocht werden muss. Allerdings gibt es durchaus auch Anwendungen, bei denen eine Vorlochung des Werkstücks und ein Einbringen eines Abschnitts des Funktionselements in das vorbereitete Loch unproblematisch oder sogar von Vorteil ist, beispielsweise weil dann bei dem anschließenden Befestigungsprozess weniger Belastungen auftreten.

Bei all den bekannten Verfahren ist eine zuverlässige Abstützung des Werkstücks von elementarer Bedeutung, da bei dem Befestigungsprozess erhebliche Kräfte auftreten. Bei ebenen Werkstücken ist dies unproblematisch, da sie einfach auf eine flache Matrize aufgelegt werden können. Wenn das Funktionselement jedoch an einem Werkstück mit einer komplexen Geometrie befestigt werden soll, stoßen bekannte Vorgehensweisen sehr schnell an ihre Grenzen. Oft ist es ihnen dann nicht mehr möglich, den Abschnitt des Werkstücks, an dem das Funktionselement befestigt werden soll, hinreichend gut abzustützen.

Besonders problematisch ist die Bestückung von Hohlprofilen mit Funktionselementen, insbesondere wenn erstere aus vergleichsweise weichem Material bestehen. Dann besteht eine besonders große Gefahr, dass die zur Befestigung der Funktionselemente erforderlichen Kräfte das Werkstück verformen, was natürlich nicht akzeptabel ist.

Die vorstehend erläuterten Probleme treten jedoch nicht nur im Zusammenhang mit der Befestigung eines Funktionselements auf, sondern auch bei bestimmten Bearbeitungsprozessen des Werkstücks selbst, die mit erheblichen Kräften verbunden sind. Hierzu gehört beispielsweise ein Umformen eines Abschnitts des Werkstücks, insbesondere durch einen Kaltumformprozess. Unter einem Umformen ist auch ein Stanzprozess zu verstehen, mit dem eine Öffnung in dem Werkstückabschnitt erzeugt wird.

Die vorliegende Erfindung macht es sich zur Aufgabe, hier Abhilfe zu schaffen und eine Vorrichtung anzugeben, mit der sich Funktionselemente an einem Abschnitt eines Werkstücks mit komplexer Geometrie befestigen lassen. Die Vorrichtung soll es auch ermöglichen, Abschnitte solcher Werkstücke umzuformen.

Erfindungsgemäß umfasst die Vorrichtung eine Stützeinrichtung zur Abstützung des Werkstücks, wobei der Werkstückabschnitt eine der Stützeinrichtung zugewandte erste Oberfläche und eine der Stützeinrichtung abgewandte zweite Oberfläche aufweist. Die Stützeinrichtung umfasst ein erstes Stützelement mit einer ersten Werkstückstützfläche, die der ersten Oberfläche zugeordnet ist, und ein zweites Stützelement mit einer von der ersten Werkstückstützfläche wegweisenden zweiten Werkstückstützfläche umfasst, die einer Abstützfläche zugeordnet ist. Die erste und die zweite Werkstückstützfläche sind insbesondere parallel zueinander angeordnet.

Erfindungsgemäß umfasst die Stützeinrichtung eine Spreizeinrichtung, mittels derer das erste und das zweite Stützelement derart relativ zueinander bewegbar sind, dass die erste und die zweite Werkstückstützfläche in einer Axialrichtung voneinander wegbewegbar sind. Die Axialrichtung erstreckt sich insbesondere senkrecht zu der ersten und/oder zweiten Werkstückstützfläche.

Die erfindungsgemäße Vorrichtung ist somit keine im Wesentlichen "starre" Matrize herkömmlicher Bauart. Durch voneinander wegbewegbare Stützelemente und eine geeignete Spreizeinrichtung, die eine entsprechende Bewegung erzeugen kann, ermöglicht sie eine dynamische Anpassung der Stützeinrichtung an die jeweils vorliegende Situation. Die Stützeinrichtung kann beispielsweise in eine kompakte Grundstellung gebracht werden, so dass sie in komplexe Werkstücke einführbar und in Arbeitspositionen platzierbar ist, die schwer zugänglich sind. In der vorgesehenen Arbeitsposition im Bereich des Werkstückabschnitts, der mit dem Funktionselement versehen und/oder der umgeformt werden soll, werden die Stützelemente dann durch die Spreizeinrichtung voneinander wegbewegt und in eine Arbeitsstellung gebracht. In dieser Arbeitsstellung steht die erste Werkstückstützfläche mit der ersten Oberfläche des Werkstücks - mittelbar oder unmittelbar - in Kontakt, während sich die zweite Werkstückstützfläche - mittelbar oder unmittelbar - an einer Abstützfläche abstützt, die beispielsweise an einem anderen Abschnitt des Werkstücks oder an einer ortsfesten Unterlage oder Fläche angeordnet ist. In diesem Zustand stützt sich der zu bearbeitende Abschnitt des Werkstücks somit zuverlässig über die anpassbare Stützeinrichtung an einer geeigneten Abstützfläche ab, so dass der Befestigungs- und/oder Umformprozess durchgeführt werden kann, ohne dass das Werkstück geschädigt wird.

Weitere Ausführungsformen der Erfindung sind in der Beschreibung, den Zeichnungen und den Ansprüchen angegeben.

Gemäß einer Ausführungsform umfasst die Vorrichtung einen entlang einer Axialrichtung bewegbaren Stempel zur Umformung eines Abschnitts des Funktionselements und/oder des Werkstückabschnitts. Insbesondere ist der Stempel in der Axialrichtung auf die zweite Oberfläche des Werkstückabschnitts zu bewegbar. Es kann auch eine Setzeinrichtung vorgesehen sein, die in der Axialrichtung bewegbar ist, um das Funktionselement an die zweite Oberfläche heranzuführen und den Befestigungsprozess durchzuführen. Bei den beiden vorstehend beschriebenen Ausführungsformen ist also vorgesehen, eine wie auch immer geartete Bearbeitungseinheit an den zu bearbeitenden Abschnitt des Werkstücks heranzuführen, während sich dieser - indirekt oder direkt - auf der ersten Werkstückstützfläche und damit letztlich auf der Abstützfläche abstützt.

In vielen Fällen kann es von Vorteil sein, wenn sich die erste Oberfläche direkt an der ersten Werkstückstützfläche abstützt und/oder sich die zweite Werkstückstützfläche direkt an der Abstützfläche abstützt. Es ist jedoch auch denkbar, dass die Stützeinrichtung ein erstes Zwischenelement umfasst, das zwischen der ersten Werkstückstützfläche und der ersten Oberfläche angeordnet ist. Alternativ oder zusätzlich kann die Stützeinrichtung ein zweites Zwischenelement umfassen, das zwischen der zweiten Werkstückstützfläche und der Abstützfläche angeordnet ist. Die Zwischenelemente können an der ihnen jeweils zugeordneten Werkstückstützfläche lösbar befestigt sein. Dadurch kann die Stützeinrichtung beispielsweise bedarfsgerecht an die jeweils vorliegenden geometrischen Bedingungen angepasst werden, ohne dass die Stützeinrichtung verändert werden muss. Außerdem sind derartige Zwischenelemente leicht austauschbar, insbesondere nach voranschreitendem Verschleiß.

Die erste Werkstückstützfläche und/oder das erste Zwischenelement können zumindest eine Ausnehmung zur zumindest teilweisen Aufnahme des Funktionselements während dem Befestigungsvorgang aufweisen. Beispielsweise wird das Element in diese Ausnehmung eingelegt, bevor die Stützeinrichtung in die geeignete Position im Bereich des zu bearbeitenden Abschnitts des Werkstücks gebracht wird.

Der Stempel und/oder die Setzeinrichtung können einen ersten Umformabschnitt zur Umformung eines Befestigungsabschnitts des Funktionselements und/oder des Werkstückabschnitts umfassen. Bei dieser Ausführungsform ist also eine Umformung des Befestigungsabschnitts und/oder des Werkstückabschnitts von der der Stützeinrichtung abgewandten zweiten Oberfläche aus vorgesehen.

Zusätzlich oder alternativ kann aber auch vorgesehen sein, dass das erste Stützelement einen zweiten Umformabschnitt zur Umformung eines Abschnitts des Funktionselements und/oder des Werkstückabschnitts umfasst. Hier erfolgt eine Umformung der genannten Komponenten somit von Richtung der ersten Oberfläche her.

Der zweite Umformabschnitt kann an einem Umformelement ausgebildet sein, das lösbar an dem ersten Stützelement befestigt ist. Diese Maßnahme ermöglicht es, das Umformelement mit nur geringem Aufwand austauschen zu können, beispielsweise wenn die Vorrichtung an neue Anforderungen anzupassen ist und/oder das Umformelement verschlissen ist. Das Umformelement kann zumindest abschnittsweise in einer Aufnahmeausnehmung des ersten Stützelements angeordnet sein. Bevorzugt ist die Aufnahmeausnehmung in der ersten Werkstückstützfläche angeordnet. Grundsätzlich kann die Aufnahmeausnehmung aber auch in dem ersten Zwischenelement - so vorhanden - vorgesehen sein.

Der erste und/oder der zweite Umformabschnitt können eine Stanzkante aufweisen, um ein Stanzen des Werkstückabschnitts zu ermöglichen.

Das Aufspreizen der Stützeinrichtung kann durch verschiedene Mechanismen bewirkt werden. Gemäß einer ersten Ausführungsform weist die Spreizeinrichtung zumindest einen ersten und einen zweiten Keilabschnitt auf, die derart miteinander zusammenwirken, dass eine translatorische Bewegung der Keilabschnitte in die Bewegung der Stützelemente in Axialrichtung umwandelbar ist. Insbesondere sind der erste Keilabschnitt dem ersten Stützelement zugeordnet und der zweite Abschnitt dem zweiten Stützelement.

Gemäß einer zweiten Ausführungsform der Spreizeinrichtung umfasst diese eine Exzentereinrichtung mit zumindest einem Exzenter, durch dessen Verdrehung die Bewegung der Stützelemente in Axialrichtung erzeugbar ist. Beispielsweise ist die Exzentereinrichtung zwischen dem ersten Stützelement und dem zweiten Stützelement angeordnet.

Die vorstehend beschriebenen mechanischen Mechanismen der Spreizeinrichtung, die zur Erzeugung der Bewegung der Stützelemente in Axialrichtung vorgesehen ist, können durch hydraulische und/oder pneumatische und/oder elektro-mechanische Aktuatoren betätigbar sein. Es ist aber auch möglich, dass die genannten Aktuatoren auch direkt zwischen den Stützelementen wirken. Dann könnte auf die Keilabschnitte oder die Exzentereinrichtung auch verzichtet werden.

Die Stützeinrichtung ist bevorzugt derart ausgestaltet, dass sie in einen Hohlraum eines als Hohlprofil ausgebildeten Werkstücks einbringbar ist, das den zur Befestigung des Funktionselements und/oder zur Umformung vorgesehenen Werkstückabschnitt und einen diesem gegenüberliegenden Abstützabschnitt umfasst, an dem die Abstützfläche ausgebildet ist. Der Begriff "Hohlprofil" ist in diesem Zusammenhang breit zu verstehen. Darunter können beispielsweise auch Werkstücke mit einem in Umfangsrichtung nicht geschlossenen Querschnitt verstanden werden, etwa Werkstücke, die in einem Querschnitt die Form eines C oder andere komplexe geometrische Querschnittsformen aufweisen. Bei der vorstehend beschriebenen Ausführungsform der Stützeinrichtung ist diese mit an der Innenseite des Werkstücks angeordneten Oberflächen - direkt oder indirekt - in Kontakt. Beispielsweise sind die erste Oberfläche und die an dem Abstützabschnitt vorgesehen Abstützfläche parallel zueinander angeordnet. Die Stützeinrichtung "überbrückt" somit einen Hohlraum des Hohlprofils, so dass dieses nicht in unerwünschter Weise durch den Befestigungs- und/oder Umformprozess deformiert wird.

Das Werkstück kann beispielsweise ein Strangpressprofil sein, das insbesondere aus Aluminium oder Stahl ist. Das Funktionselement ist bevorzugt ebenfalls aus Metall, insbesondere aus Stahl gefertigt.

Die vorliegende Erfindung betrifft ferner ein Verfahren zur Befestigung eines Funktionselements an einem Abschnitt eines Werkstücks und/oder zur Umformung eines Abschnitts des Werkstücks, insbesondere wobei das Werkstück ein Hohlprofil ist.

Dabei kommt eine Vorrichtung zum Einsatz, die eine Stützeinrichtung zur Abstützung des Werkstücks umfasst, wobei der Werkstückabschnitt eine der Stützeinrichtung zugewandte erste Oberfläche und eine der Stützeinrichtung abgewandte zweite Oberfläche aufweist. Die Stützeinrichtung umfasst ein erstes Stützelement mit einer ersten Werkstückstützfläche, die der ersten Oberfläche zugeordnet ist, und ein zweites Stützelement mit einer von der ersten Werkstückstützfläche wegweisenden zweiten Werkstückstützfläche, die einer Abstützfläche zugeordnet ist. Das erste und das zweite Stützelement sind mittels einer Spreizeinrichtung derart relativ zueinander bewegbar, dass die erste und die zweite Werkstückstützfläche in einer Axialrichtung voneinander wegbewegt werden. Die Axialrichtung kann sich senkrecht zu der ersten und/oder zweiten Werkstückstützfläche erstrecken. Bevorzugt kommt bei dem Verfahren eine Vorrichtung gemäß einer vorstehend beschriebenen Ausführungsformen zum Einsatz.

Das Verfahren umfasst zumindest die Schritte:
- Positionieren des Werkstücks und/oder der Stützeinrichtung derart, dass der Werkstückabschnitt benachbart der ersten Werkstückstützfläche des ersten Stützelements angeordnet ist,
- Betätigung der Spreizeinrichtung, bis die erste Werkstückstützfläche - direkt oder indirekt - in Kontakt mit der ersten Oberfläche und die zweite Werkstückstützfläche - direkt oder indirekt - in Kontakt mit der Abstützfläche stehen, und
- Bewegen eines Stempels in Axialrichtung auf die zweite Oberfläche zu, um das Funktionselement an dem Werkstückabschnitt zu befestigen und/oder um den Werkstückabschnitt umzuformen.

Alternativ kann der letzte Verfahrensschritt auch ein Bewegen des Funktionselements mittels einer Setzeinrichtung in Axialrichtung auf die zweite Oberfläche zu umfassen, um das Funktionselement an dem Werkstückabschnitt zu befestigen.

Gemäß einer Ausführungsform ist das Werkstück ein Hohlprofil mit einem Hohlraum, der abschnittsweise durch die erste Oberfläche und eine dritte Oberfläche, die der ersten Oberfläche gegenüberliegt und die die Abstützfläche umfasst, begrenzt ist. Bevorzugt ist das Hohlprofil einstückig ausgebildet.

Es kann vorgesehen sein, dass vor dem Schritt des Positionierens des Werkstücks und/oder der Stützeinrichtung eine Öffnung in dem Werkstückabschnitt erzeugt wird, die zur Aufnahme eines Abschnitts des Funktionselements vorgesehen ist. Mit anderen Worten wird das Werkstück vorgelocht.

Die Stützeinrichtung kann vor dem Schritt des Positionierens des Werkstücks und/oder der Stützeinrichtung mit zumindest einem Funktionselement bestückt werden. Dies bedeutet beispielsweise, dass die Stützeinrichtung mit einem oder mehreren Funktionselementen versehen in das Werkstück mit komplexer Geometrie eingebracht wird. Vorteilhafterweise sind die Elemente dabei auf einer der ersten Oberfläche des Werkstückabschnitts zugewandten Seite der Stützeinrichtung angeordnet, also im Bereich des ersten Stützelements und/oder des ersten Zwischenelements. Mit dem Betätigen der Spreizeinrichtung werden die Funktionselemente dann gegen die erste Oberfläche gepresst, so dass der Befestigungsvorgang durchgeführt werden kann.

Bei einem vorgelochten Werkstückabschnitt werden das Werkstück und die Stützeinrichtung derart positioniert, dass ein Abschnitt des Funktionselements mit der für ihn vorgesehenen Öffnung fluchtet. Dieser Abschnitt des Funktionselements wird durch die Betätigung der Spreizeinrichtung in die Öffnung eingebracht.

Durch die Bewegung des Stempels kann eine Umformung des Abschnitts des Funktionselements bewirkt werden. Bevorzugt wird dabei ein Hinterschnitt erzeugt, der einem Auspressen des Funktionselements in Axialrichtung entgegensteht. Beispielsweise wird ein in eine vorgefertigte Öffnung eingebrachter Befestigungsabschnitt des Funktionselements durch die Wirkung des Stempels umgeformt. Die Erzeugung eines Hinterschnitts ist nicht zwingend erforderlich. Es ist auch denkbar, dass der Abschnitt des Funktionselements gegen eine Wandung der Öffnung gepresst wird, um einen Kraftschluss zwischen dem Element und dem Werkstückabschnitt zu erzeugen.

In diesem Zusammenhang wird darauf hingewiesen, dass durch die Bewegung des Stempels bei Bedarf auch eine Umformung des Werkstückabschnitts vorgesehen sein kann, wenn dies in dem jeweiligen Anwendungsfall von Vorteil ist.

Der Schritt der Umformung des Werkstückabschnitts kann ein Stanzen umfassen, durch das eine Öffnung in dem Werkstückabschnitt erzeugt wird. Erfindungsgemäß ist es also möglich, nicht nur Funktionselemente an einem Werkstückabschnitt zu befestigen, sondern - alternativ oder zusätzlich - den Werkstückabschnitt zu bearbeiten, insbesondere eine oder mehrere Öffnungen in den Werkstückabschnitt zu stanzen.

Zu diesem Zweck kann die Stützeinrichtung Stanzkanten aufweisen, die mit Stanzkanten an dem Stempel zusammenwirken, um einen Butzen aus dem Werkstückabschnitt herauszutrennen. Der Butzen kann in einer Aufnahme der Stützeinrichtung aufgefangen werden. Er wird beispielsweise aus dieser entfernt, nachdem die Stützeinrichtung aus dem Werkstück wieder entfernt wurde. Es ist jedoch auch denkbar, in der Stützeinrichtung Abführkanäle vorzusehen, durch die herausgestanzte Butzen abgeführt werden.

Es ist auch möglich, dass das Funktionselement selbststanzend ausgebildet ist. Es stanzt sich somit die es aufnehmende Öffnung selbst, wobei eine an dem Funktionselement vorgesehene Stanzkante mit einer entsprechenden Stanzkante an der Stützeinrichtung zusammenwirkt.

Die vorliegende Erfindung betrifft ferner ein Zusammenbauteil, das gemäß einem Verfahren nach einem der vorstehend beschriebenen Ausführungsformen hergestellt wurde. Das Werkstück umfasst ein Hohlprofil, bevorzugt aus Aluminium oder Stahl, und zumindest ein Funktionselement, bevorzugt aus Stahl, das mittels eines Clinch-, Niet-, Einpress- oder Schweißprozesses an einem Abschnitt des Hohlprofils befestigt ist.

Das Funktionselement kann ein Mutterelement oder ein Bolzenelement sein. Die beiden vorstehend genannten Begriffe sind breit auszulegen. Es ist bevorzugt aber nicht zwingend erforderlich, dass das Mutterelement mit einem Innengewinde- und das Bolzenelement mit einem Außengewinde versehen ist. Anstelle der Gewinde können auch glatte Oberflächen vorgesehen sein. Es ist auch denkbar, dass das Funktionselement eine Komponente einer Klemm- oder Clipsverbindung ist.

Die vorliegende Erfindung wird nachfolgend beispielhaft anhand vorteilhafter Ausführungsformen beschrieben. Es zeigen:
- Fig. 1a bis 1c: Beispiele für Werkstücke, die als Hohlprofile ausgebildet sind,
- Fig. 2a bis 2c: eine erste Ausführungsform der erfindungsgemäßen Vorrichtung in verschiedenen Zuständen,
- Fig. 3a bis 3c: eine zweite Ausführungsform der erfindungsgemäßen Vorrichtung in verschiedenen Zuständen,
- Fig. 4a und 4b: eine dritte Ausführungsform der erfindungsgemäßen Vorrichtung,
- Fig. 5a und 5b: eine vierte Ausführungsform der erfindungsgemäßen Vorrichtung in verschiedenen Zuständen,
- Fig. 6a und 6b: eine fünfte Ausführungsform der erfindungsgemäßen Vorrichtung in verschiedenen Zuständen,
- Fig. 7a bis 7c: eine sechste Ausführungsform der erfindungsgemäßen Vorrichtung in verschiedenen Zuständen und
- Fig. 8a und 8b: eine siebte Ausführungsform der erfindungsgemäßen Vorrichtung in verschiedenen Zuständen.

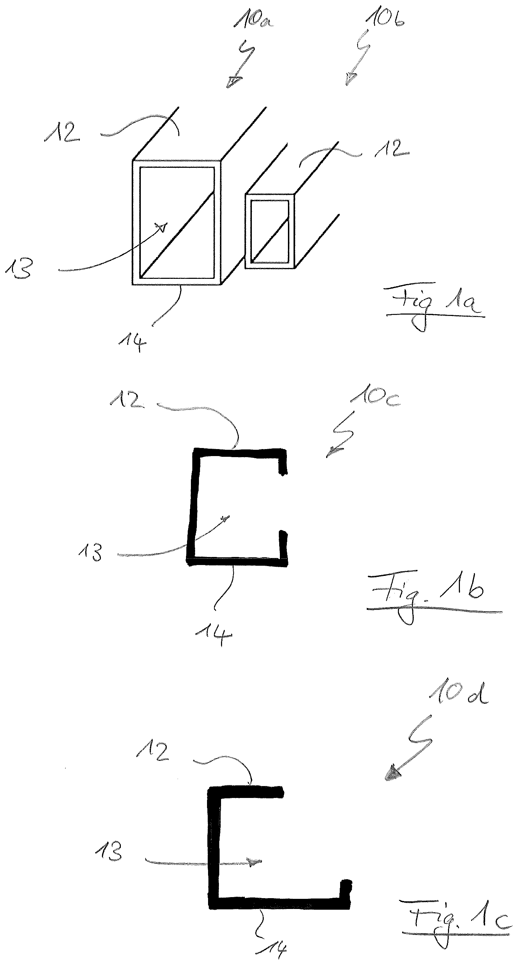

Fig. 1a zeigt beispielhaft zwei Hohlprofile 10a und 10b, die beispielsweise Strangpressprofile sein können. Für viele Anwendungen im Automobilbau werden solche Hohlprofile beispielsweise aus Aluminium oder Stahl gefertigt.

Die Hohlprofile 10a, 10b können beliebig dimensioniert sein. Dargestellt sind zwei Beispiele von Hohlprofilen 10a, 10b mit unterschiedlicher dimensionierten Seiten. Es ist auch durchaus vorstellbar, dass der Querschnitt im Wesentlichen quadratisch ist und/oder die Kanten abgerundet sind. Unter einem Hohlprofil im Sinne der vorliegenden Erfindung sind beispielsweise auch Profile zu verstehen, die im Querschnitt polygonal sind.

Die Hohlprofile 10a, 10b sind in Umfangsrichtung geschlossen. Sie können jedoch auch Ausnehmungen aufweisen oder, wie anhand der Fig. 1b und 1c gezeigt, abschnittsweise offen sein. Das Hohlprofil 10c der Fig. 1b weist beispielsweise einen im Wesentlichen C-förmigen Querschnitt auf. Das Hohlprofil 10d der Fig. 1c ist noch komplexer geformt.

Allen beispielhaft gezeigten Hohlprofilen 10a bis 10d ist gemein, dass die Befestigung eines Funktionselements an einer der Seitenflächen der Profile 10a bis 10d, beispielsweise an einer Seitenflächen 12, mit herkömmlichen Verfahren nicht ohne weiteres möglich oder sehr aufwändig ist. Im Gegensatz zu ebenen Werkstücken, können die Hohlprofile 10a, 10b, 10c, 10d (nachfolgend vereinfacht als Hohlprofile 10 bezeichnet) nicht einfach auf einer Matrize abgelegt werden. Das Einbringen eines Elements in die Seitenfläche 12 ohne deren Abstützung würde zu einer massiven Deformation des Hohlprofils 10 führen, was nicht akzeptabel ist.

Erfindungsgemäß wird daher vorgeschlagen, eine als Matrize wirkende Stützeinrichtung mit variabler Geometrie vorgesehen, die in einen Hohlraum 13 des Hohlprofils 10 eingebracht werden kann. Die Stützeinrichtung sieht in den nachfolgend gezeigten Beispielen eine Abstützung zwischen der Seitenfläche 12 und einer dieser gegenüberliegenden Seitenfläche 14 des Hohlprofils vor.

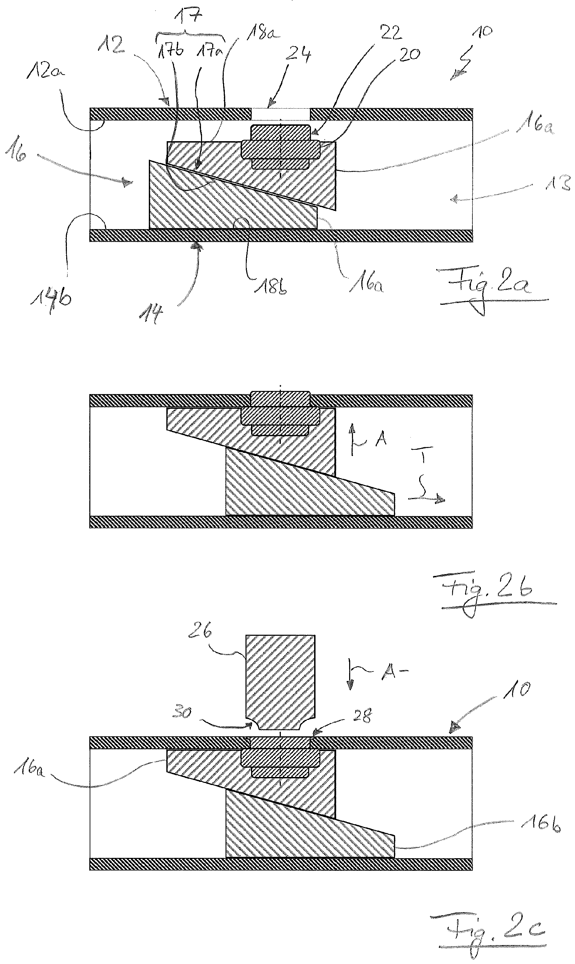

Die Fig. 2a bis 2c zeigen eine erste Ausführungsform der Stützeinrichtung, die mit dem Bezugszeichen 16 gekennzeichnet ist. Die Stützeinrichtung 16 umfasst ein erstes Stützelement 16a und ein zweites Stützelement 16b, die keilförmig ausgebildet sind. Sie wirken über schräge Flächen oder Keilabschnitte 17a, 17b zusammen.

Die Stützelemente 16a, 16b weisen jeweils eine Stützfläche 18a bzw. 18b auf, die an einander gegenüberliegenden Oberflächen 12a, 14b der Seitenabschnitte 12 bzw. 14 angeordnet sind.

In Fig. 2a ist ein Grundzustand der Stützeinrichtung 16 gezeigt. Die Stützeinrichtung 16 ist mit einem Befestigungselement 20 bestückt, das im vorliegenden Ausführungsbeispiel als Mutterelement ausgebildet ist. Das Befestigungselement 20 weist einen Nietabschnitt 22 auf, der zur Befestigung des Elements 20 an dem Hohlprofil 10 vorgesehen ist. Zur Aufnahme des Nietabschnitts 22 weist das Hohlprofil 10 ein vorgefertigtes Loch 24 auf.

Die Stützeinrichtung 16 wird in der Grundstellung seitlich in einen Hohlraum 13 des Hohlprofils 10 eingeführt, bis der Nietabschnitt 22 mit dem Loch 24 fluchtet. Anschließend werden die Stützelemente 16a, 16b relativ zueinander verfahren, um den Nietabschnitt 22 in das Loch 24 einzubringen. Im vorliegenden Beispiel wird hierzu das Stützelement 16a relativ zu dem Hohlprofil nicht bewegt, um die korrekte Orientierung des Nietabschnitts 22 relativ zu dem Loch 24 nicht aufzuheben. D.h. lediglich das Stützelement 16a wird nach rechts bewegt (Translationsbewegung T). Durch die keilförmige Ausgestaltung der Stützelemente 16a, 16b wird ersteres in einer Axialrichtung A nach oben bewegt, bis die Stützfläche 18a zuverlässig an der Oberfläche 12a anliegt. Dies bedeutet, dass einerseits eine zuverlässige Abstützung des Seitenabschnitts 12 auf der Stützeinrichtung 16 und damit auch Seitenabschnitt 14 bereitgestellt wird. Der Seitenabschnitt 14 liegt wiederum auf einer nicht gezeigten stabilen Auflagefläche auf. Andererseits wird die Bewegung in Axialrichtung A begrenzt, so dass der Seitenabschnitt 12 nicht nach außen ausgebeult wird. Die Stützeinrichtung 16 befindet sich nun in einer Arbeitsstellung.

Die Keilabschnitte 17a, 17b fungieren somit als eine Spreizeinrichtung 17, durch deren Betätigung ein bedarfsgerechtes Einspreizen der Stützeinrichtung 16 in dem Hohlprofil 10 bewirkt wird.

Sobald der Befestigungsabschnitt 22 korrekt positioniert ist und eine zuverlässige Abstützung des Seitenabschnitts 12 hergestellt ist, wird der Nietabschnitt 22 durch einen entgegen der Axialrichtung A (Bewegungsrichtung A-) bewegten Stempel 26 umgeformt, so dass ein umgeformter oder umgebördelte Abschnitte 28 des Nietabschnitts 22 den Rand des Lochs 24 hintergreift. Zu diesem Zweck weist der Stempel 26 einen entsprechend geformten Umformabschnitt 30 auf. Dieser greift bei einer Bewegung des Stempels 26 in Bewegungsrichtung A- in den Nietabschnitt 22 ein. Durch die divergierende Formgebung des Umformabschnitts 30 wird bei fortgesetzter Bewegung des Stempels 26 der Nietabschnitt 22 nach außen umgeformt.

Nach dem Abschluss des Befestigungsprozesses kann die Stützeinrichtung 16 aus der in den Fig. 2b und 2c gezeigten Arbeitsstellung in die Grundstellung gebracht werden, wie sie in Fig. 2a gezeigt ist. Das Element 20 verbleibt dabei an dem Hohlprofil 10. Beispielsweise kann das Stützelement 16b zunächst vollkommen entfernt werden, so dass das Stützelement 16a abgesenkt und dann ebenfalls entfernt werden kann.

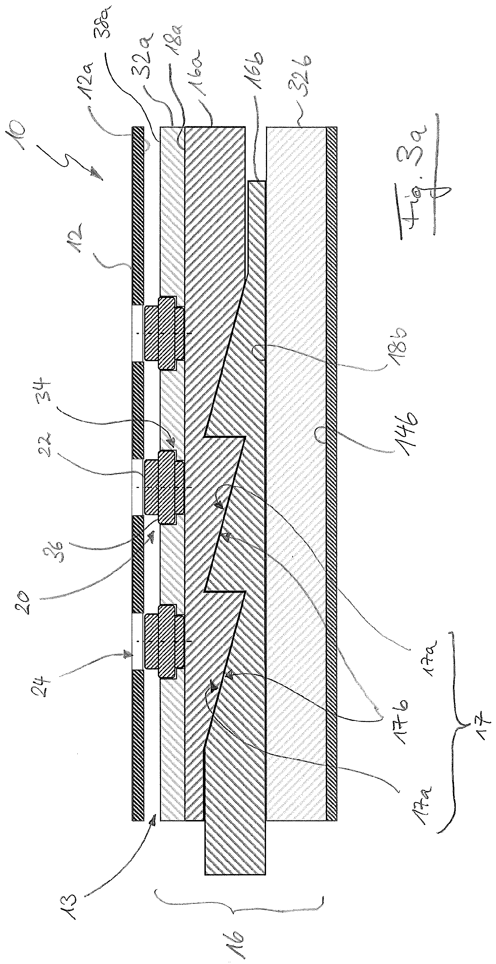

Die Fig. 3a bis 3c zeigen eine weitere Ausführungsform der Stützeinrichtung 16. Diese ermöglicht es, gleichzeitig mehrere Befestigungselemente 20 an Löchern 24 des Hohlprofils 10 zu befestigen. Sie umfasst neben den Stützelementen 16a, 16b, der mehrere hintereinander angeordnete Keilabschnitte 17a, 17b aufweisen, Zwischenelemente 32a, 32b. Das Zwischenelement 32a ist zwischen der Stützfläche 18a und der Oberfläche 12a des Seitenabschnitts 12 angeordnet. Sie weist gestufte Ausnehmungen 34 zur Aufnahme eines Abschnitts der Befestigungselemente 20 auf. Dadurch ist es möglich, einen Flansch 36 der Elemente 20 im Wesentlichen oder fast bündig mit einer der Oberfläche 12a zugewandten Fläche 38a des Zwischenelements 32a anzuordnen.

Das Zwischenelement 32b ist zwischen der Stützfläche 18b und der Oberfläche 14b angeordnet.

Durch die Zwischenelemente 32a, 32b ist es möglich, die Stützelemente 16a, 16b bei Hohlprofilen 10 mit unterschiedlichem Abstand der Seitenabschnitte 12, 14 zu verwenden. Bei einem größeren Abstand der genannten Abschnitte 12, 14 werden einfach dickere Zwischenelemente 32a und/oder 32b verwendet. Außerdem kann die Stützeinrichtung 16 sehr einfach an andere Geometrien der Elemente 20 angepasst werden. Hierfür muss beispielsweise lediglich das Zwischenelement 32a ausgetauscht werden, das mit entsprechend veränderten Ausnehmungen 34 versehen ist. Auch eine veränderte Positionierung der Löcher 24 kann durch die Verwendung eines entsprechend angepassten Zwischenelements 32a auf einfache Weise berücksichtigt werden.

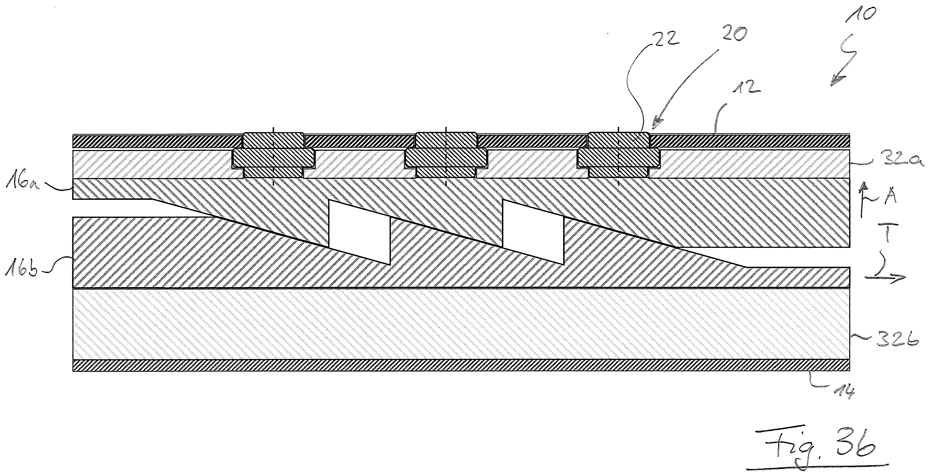

In Fig. 3a ist die Grundstellung der Stützeinrichtung 16 gezeigt, so wie diese in den Hohlraum 13 des Hohlprofils eingeschoben wird. In Fig. 3b befindet sich die Stützeinrichtung 16 in der Arbeitsstellung. Das Stützelement 16a wurde durch eine Translationsbewegung T des Stützelements 16b nach rechts in Axialrichtung A nach oben bewegt, wodurch die Nietabschnitte 22 der Befestigungselemente 20 in den Löchern 24 positioniert wurden.

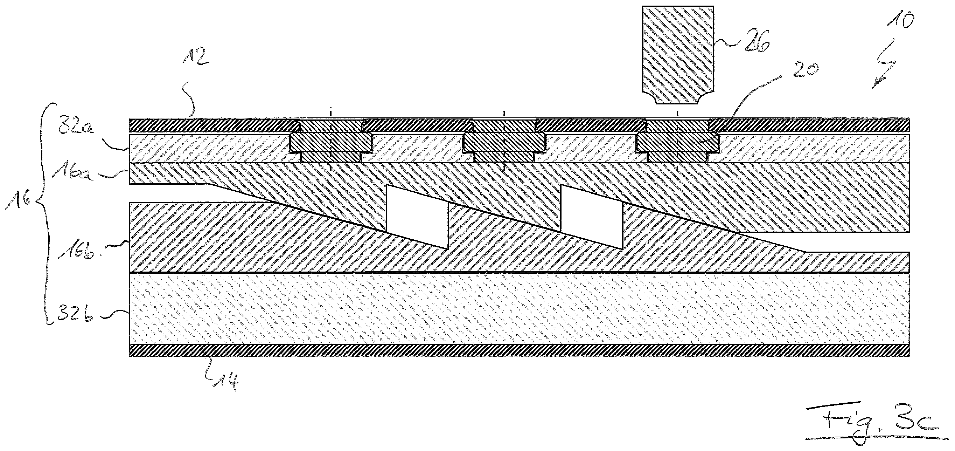

Anschließend werden die Nietabschnitte 22 durch einen oder mehrere Stempel 26 gleichzeitig oder nacheinander umgeformt, wodurch die Elemente 20 sicher an dem Hohlprofil fixiert werden (Fig. 3c).

Nach dem Abschluss des Befestigungsprozesses kann das Stützelement 16b wieder nach links bewegt werden, wodurch das Stützelement 16a und das Zwischenelement 32a wieder abgesenkt werden. Nun kann die Stützeinrichtung 16 aus dem Hohlraum 13 entfernt werden.

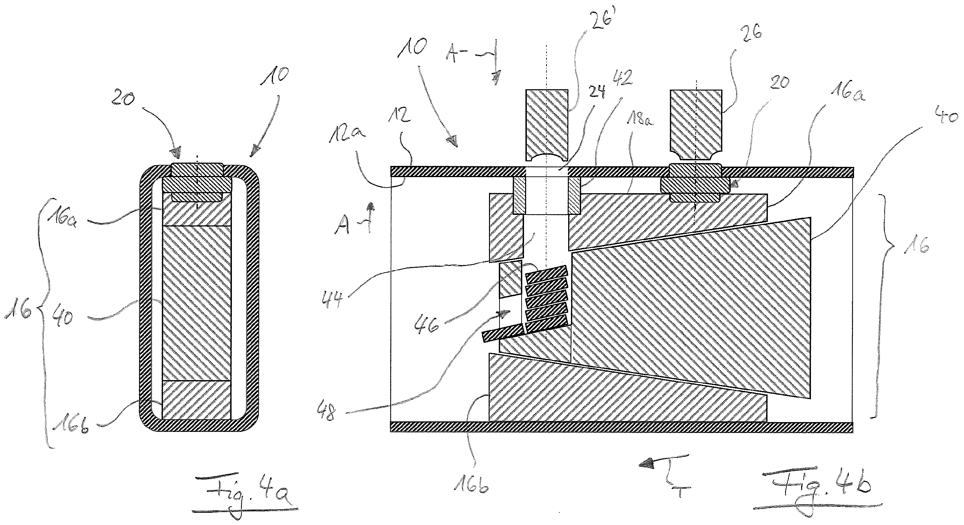

In den Fig. 4a und 4b ist eine weitere Ausführungsform der Stützeinrichtung 16 gezeigt. Diese umfasst ein zentrales Keilelement 40, das zwischen zwei keilförmigen Stützelementen 16a, 16b angeordnet ist. Durch eine Translationsbewegung T nach links laufen dessen Schrägen an entsprechenden Schrägen der Stützelemente 16a, 16b auf, wodurch letztlich das Stützelement 16a in Axialrichtung A nach oben bewegt wird. Durch die doppelte "Keilwirkung" der durch die Schrägen der Komponenten gebildeten Spreizeinrichtung kann bei gleichbleibender Neigung der Keilflächen eine größere Axialbewegung A erzeugt werden.

Fig. 4b zeigt ferner, dass neben einem Befestigen eines Elements 20 an dem Hohlprofil 10 auch ein Stanzen einer Öffnung 20 in den Seitenabschnitt 12 mittels der Stützeinrichtung 16 realisiert werden kann. Das Stützelement 16a ist zu diesem Zweck mit einem Matrizenelement 42 versehen, das in einen Endabschnitt eines Abfuhrkanals 44 eingesetzt ist.

Sobald sich die Stützeinrichtung 16 in der Arbeitsstellung befindet, wird in Zusammenwirkung mit dem Matrizenelement 42 durch eine Bewegung eines Stanzstempels 26' in einer Richtung A- entgegen der Axialrichtung A ein Butzen 46 aus dem Seitenabschnitt 12 ausgestanzt. Er fällt durch das hohle Matrizenelement 42 und den Abfuhrkanal 44 nach unten. In einer geeigneten Stellung des Keilelements 40 steht der Abfuhrkanal 44 mit einem weiteren Kanal 48 in dem Keilelement 40 in Verbindung, durch den die ausgestanzten Butzen 46 dann weiter abgeführt werden können.

In Fig. 4b stehen die Flächen 18a, 12a nicht in direktem Kontakt. Grundsätzlich könnte dieser Abstand durch ein Zwischenelement 32a, wie es beispielsweise anhand der Fig. 3a bis 3c gezeigt wurde, überwunden werden. Grundsätzlich ist es jedoch auch möglich, darauf zu verzichten, wenn es die bei dem jeweiligen Anwendungsfall auftretenden Kräfte und Materialeigenschaften zulassen.

Die Fig. 4a zeigt einen Querschnitt durch das Hohlprofil 10 und die Stützeinrichtung 16.

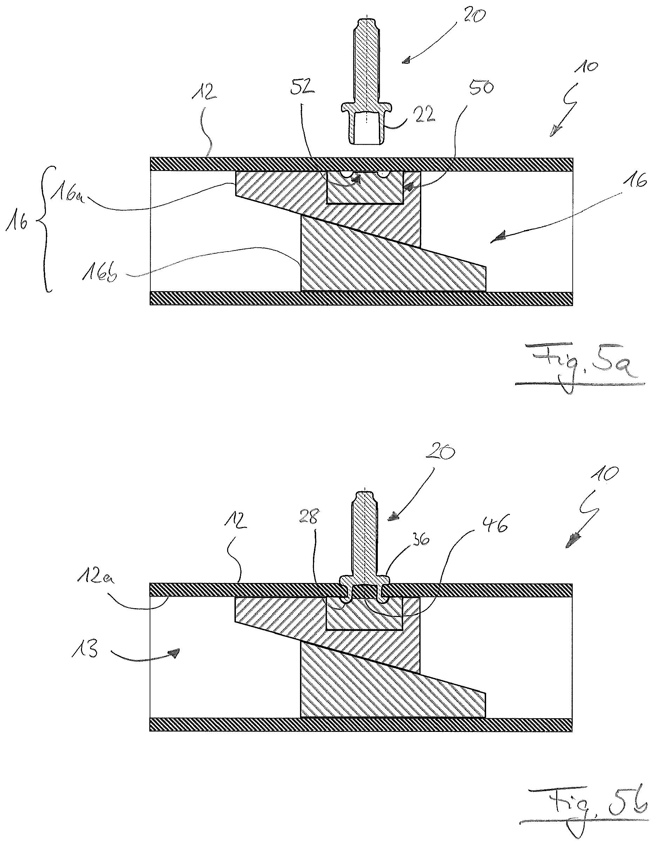

In den Fig. 5a und 5b ist die Verwendung einer Ausführungsform der Stützeinrichtung 16 zusammen mit einem selbststanzenden Befestigungselement 20, hier als Bolzenelement ausgebildet, gezeigt. Die Stützeinrichtung 16 ähnelt in weiten Teilen denen der Fig. 2a bis 2c. In dem Stützelement 16a ist jedoch ein Umformelement 50 angeordnet. Es ist in einer entsprechenden Ausnehmung des Stützelements 16a angeordnet und kann auf einfache Weise ausgetauscht werden, falls beispielsweise ein anderes Element 20 an dem Profil 10 befestigt werden soll oder falls das Umformelement 50 abgenutzt ist und ausgetauscht werden muss.

In Fig. 5a ist die Stützeinrichtung 16 bereits in der Arbeitsstellung. Das Befestigungselement 20 wird dann fest gegen den Seitenabschnitt 12 des Hohlprofils 10 gepresst. Der Nietabschnitt 22 des Elements 20 weist eine Stanzkante auf, die mit einer entsprechenden Stanzkante an einem Umformabschnitt 52 des Umformelements 50 zusammenwirkt. Dabei wird ein Butzen 46 herausgestanzt, der nach einer Entfernung der Stützeinrichtung 16 in dem Nietabschnitt 22 verbleibt, beispielsweise da er dort durch Klemmkräfte gefangen ist. Er kann aber auch nach dem Abschluss des Befestigungsprozesses durch den Hohlraum 13 problemlos entfernt werden, falls er von dem Nietabschnitt 22 nicht gehalten wird.

Der Umformabschnitt 52 ist im Übrigen nicht nur mit einer Stanzkante versehen, sondern weist auch einen gekrümmten Umformabschnitt auf, durch den der Nietabschnitt 22 nach dem Ausstanzen des Butzens abschnittsweise nach außen umgebogen wird und so die Oberfläche 12a des Abschnitts 12 hintergreift. Das heißt, der Rand des durch das Element 20 ausgestanzten Lochs wird durch den Flansch 36 und den umgeformten Abschnitt 28 des Nietabschnitts 22 geklemmt, so dass das Befestigungselement 20 sicher an dem Hohlprofil 10 gehalten ist.

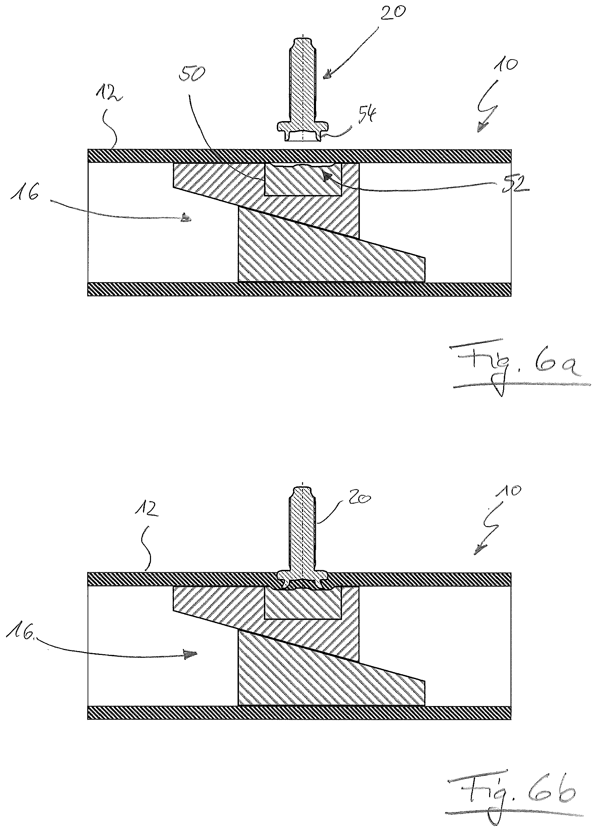

Die Fig. 6a und 6b zeigen die Stützeinrichtung 16 der Fig. 5a und 5b, wobei das Umformelement 52 durch ein anderes Umformelement mit einem Umformabschnitt 52 mit anderer Geometrie ausgetauscht wurde. Das an dem Hohlprofil 10 zu befestigende Element 20 weist einen Befestigungsabschnitt 54 auf, der bei dem Befestigungsprozess den Seitenabschnitt 12 nicht durchdringt, der aber durch die Geometrie des Umformabschnitts 52 aufgeweitet wird, so dass ein Herausziehen des Bolzenelements 20 aus dem Seitenabschnitt 12 zuverlässig verhindert wird. Letztlich liegt hier ein Formschluss zwischen dem umgeformten Befestigungsabschnitt 54 und Inneren des Abschnitts 12 vor.

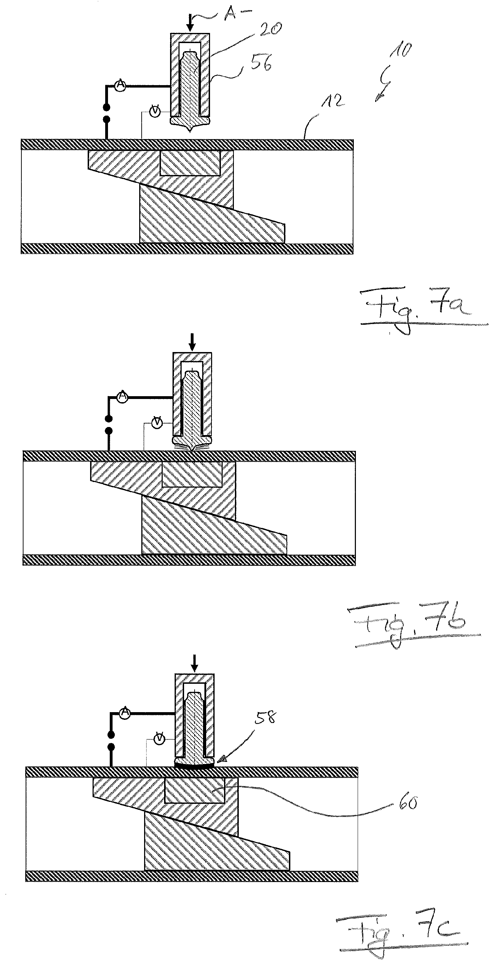

Die Fig. 7a bis 7c verdeutlichen, dass die Stützeinrichtung 16 der Fig. 5a bis 6b auch bei einem Befestigungsprozess verwendet werden kann, der keinen Kaltumformprozess beinhaltet. Gezeigt ist ein Schweißprozess, bei dem ein Bolzenelement 20 durch eine Setzeinrichtung 56, die bei den Fig. 5a bis 6b der Einfachheit halber nicht gezeigt wurde, gegen den Seitenabschnitt 12 des Hohlprofils 10 gedrückt wird. Durch Anlegen einer elektrischen Spannung findet dann ein Schweißprozess statt (vgl. Fig. 7b), durch den eine das Befestigungselement 20 sicher an dem Hohlprofil 10 fixierende Schweißverbindung 58 erzeugt wird.

Da bei diesem Ausführungsbeispiel keine mechanische Kaltumformung des Elements 20 oder des Seitenabschnitts 12 stattfindet, ist das Umformelement 50 bei dem Vorgehen gemäß den Fig. 7a bis 7c durch ein Abstützelement 60 mit planarer Oberfläche versetzt worden.

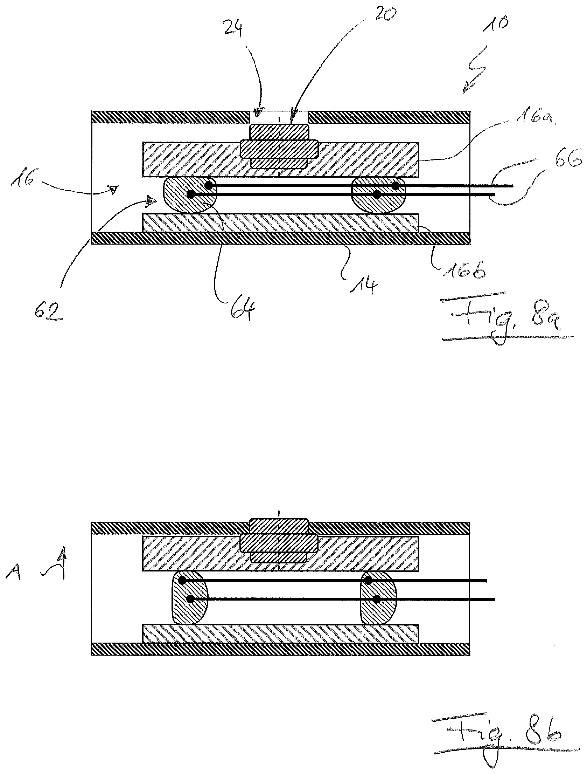

Anhand der Fig. 8a und 8b soll verdeutlicht werden, dass die Stützeinrichtung 16 nicht zwingend einen Mechanismus mit zusammenwirkendem Keilabschnitt umfassen muss. In dem dargestellten Ausführungsbeispiel weist die Stützeinrichtung neben den Stützelementen 16a und 16b eine zwischen diesen wirkende Exzentereinrichtung 62 auf, die beispielsweise zwei Exzenter 64 umfasst (die Anzahl der Exzenter 64 ist beliebig). Durch ein Verdrehen der Exzenter 64 (beispielsweise durch auf die Exzenter wirkenden Gestängekomponenten 66, wie sie in den Fig. 8a und 8b gezeigt sind, oder durch einen direkt wirksamen Drehantrieb) wird das Stützelement 16a von dem sich über den Seitenabschnitt 14b und eine nicht gezeigte ortsfeste Abstützfläche an dem Stützelement 16b in Axialrichtung A nach oben bewegt, bis die in Fig. 8b gezeigte Arbeitsstellung erreicht ist.

Es versteht sich, dass anhand der Fig. 2a bis 7c beschriebene Aspekte der Stützeinrichtung 16 auch auf die Stützeinrichtung 16 gemäß den Fig. 8a bis 8b angewendet werden kann.

Anstelle eines Keilmechanismus oder eines Exzentermechanismus zur Aufspreizung der Stützeinrichtung 16 in Axialrichtung A können auch direkt wirkende Aktuatoren vorgesehen sein, beispielsweise pneumatische, hydraulische und/oder elektro-mechanische Aktuatoren. Die Erzeugung der für einen Keilmechanismus und/oder einen Exzentermechanismus erforderlichen antriebswirksamen Kräfte können ebenfalls durch Aktuatoren der genannten Art bereitgestellt werden.

Das erfindungsgemäße Konzept ermöglicht es, herkömmliche Funktionselemente an einem Hohlprofil zu befestigen, was bisher nicht oder nur mit äußerst großem Aufwand möglich war.

### Bezugszeichen

- 10a, 10b, 10c, 10d, 10: Hohlprofil
- 12, 14: Seitenabschnitt
- 12a, 14b: Oberfläche
- 13: Hohlraum
- 16: Stützeinrichtung
- 16a, 16b: Stützelement
- 17: Spreizeinrichtung
- 17a, 17b: Keilabschnitt
- 18a, 18b: Stützfläche
- 20: Befestigungselement
- 22: Nietabschnitt
- 24: Loch
- 26, 26': Stempel
- 28: umgeformter Abschnitt
- 30: Umformabschnitt
- 32a, 32b: Zwischenelement
- 34: Ausnehmung
- 36: Flansch
- 38a: Fläche
- 40: Keilelement
- 42: Matrizenelement
- 44: Abfuhrkanal
- 46: Butzen
- 48: Kanal
- 50: Umformelement
- 52: Umformabschnitt
- 54: Befestigungsabschnitt
- 56: Setzeinrichtung
- 58: Schweißverbindung
- 60: Abstützelement
- 62: Exzentereinrichtung
- 64: Exzenter
- 66: Gestänge
- T: Translationsbewegung
- A, A-: Axialrichtung, Axialbewegung

## Patentansprüche

1. Vorrichtung zur Befestigung eines Funktionselements (20) an einem Abschnitt (12) eines Werkstücks (10) und/oder zur Umformung eines Abschnitts des Werkstücks, umfassend eine Stützeinrichtung (16) zur Abstützung des Werkstücks, wobei der Werkstückabschnitt eine der Stützeinrichtung zugewandte erste Oberfläche (12a) und eine der Stützeinrichtung abgewandte zweite Oberfläche aufweist,
wobei die Stützeinrichtung ein erstes Stützelement (16a) mit einer ersten Werkstückstützfläche (18a), die der ersten Oberfläche zugeordnet ist, und ein zweites Stützelement (16b) mit einer von der ersten Werkstückstützfläche weg weisenden zweiten Werkstückstützfläche (18b) umfasst, die einer Abstützfläche (14b) zugeordnet ist, und
wobei das erste und das zweite Stützelement mittels einer Spreizeinrichtung (13, 62) derart relativ zueinander bewegbar sind, dass die erste und die zweite Werkstückstützfläche in einer Axialrichtung (A) voneinander weg bewegbar sind, insbesondere wobei sich die Axialrichtung senkrecht zu der ersten und/oder zweiten Werkstückstützfläche erstreckt.

2. Vorrichtung nach Anspruch 1,
wobei die Vorrichtung einen entlang der Axialrichtung (A) bewegbaren Stempel (26, 26') zur Umformung eines Abschnitts (12) des Funktionselements (20) und/oder des Werkstückabschnitts (12) umfasst.

3. Vorrichtung nach Anspruch 1 oder 2,
wobei die Vorrichtung eine entlang der Axialrichtung (A) bewegbaren Setzeinrichtung (56) zum Heranführen des Funktionselements (20) an die zweite Oberfläche umfasst.

4. Vorrichtung nach einem der vorstehenden Ansprüche,
wobei die Stützeinrichtung (16) ein erstes Zwischenelement (32a) umfasst, dass zwischen der ersten Werkstückstützfläche (18a) und der ersten Oberfläche (12a) angeordnet ist und/oder wobei die Stützeinrichtung ein zweites Zwischenelement (32b) umfasst, das zwischen der zweiten Werkstückstützfläche (18b) und der Abstützfläche (14b) angeordnet ist und/oder wobei die ersten Werkstückstützfläche (18a) und/oder das erste Zwischenelement (32a) eine Ausnehmung (34) zur zumindest teilweisen Aufnahme des Funktionselements (20) während dem Befestigungsvorgang aufweisen.

5. Vorrichtung nach einem der vorstehenden Ansprüche,
wobei der Stempel (26, 26') und/oder die Setzeinrichtung (56) einen ersten Umformabschnitt (30) zur Umformung eines Befestigungsabschnitts (22) des Funktionselements (20) und/oder des Werkstückabschnitts (12) umfasst.

6. Vorrichtung nach einem der vorstehenden Ansprüche,
wobei das erste Stützelement (16a) einen zweiten Umformabschnitt (52) zur Umformung eines Abschnitts (12) des Funktionselements (20) und/oder des Werkstückabschnitts (12) umfasst, insbesondere wobei der zweite Umformabschnitt (52) an einem Umformelement (50) ausgebildet ist, das lösbar an dem ersten Stützelement (16a) befestigt ist, insbesondere wobei das Umformelement zumindest abschnittsweise in einer Aufnahmeausnehmung des ersten Stützelements, insbesondere der erste Werkstückstützfläche (18a), angeordnet ist.

7. Vorrichtung nach Anspruch 5 oder 6,
wobei der erste und/oder der zweite Umformabschnitt (30, 52) eine Stanzkante aufweisen.

8. Vorrichtung nach einem der vorstehenden Ansprüche,
wobei die Spreizeinrichtung (13) zumindest einen ersten und einen zweiten Keilabschnitt (17a, 17b) aufweist, die derart miteinander zusammenwirken, dass eine translatorische Bewegung (T) in die Bewegung in Axialrichtung (A) umwandelbar ist, insbesondere wobei der erste Keilabschnitt dem ersten Stützelement (16a) zugeordnet ist und wobei der zweite Keilabschnitt dem zweiten Stützelement (16b) zugeordnet ist.

9. Vorrichtung nach einem der vorstehenden Ansprüche,
wobei die Spreizeinrichtung zumindest eine Exzentereinrichtung (62) mit zumindest einem Exzenter (64) umfasst, durch dessen Verdrehung die Bewegung in Axialrichtung (A) erzeugbar ist.

10. Vorrichtung nach einem der vorstehenden Ansprüche,
wobei die Stützeinrichtung (16) derart ausgestaltet ist, dass sie in einen Hohlraum (13) eines als Hohlprofil (10) ausgebildeten Werkstücks einbringbar ist, das den zur Befestigung des Funktionselements (20) und/oder den zur Umformung vorgesehen Werkstückabschnitt (12) und einen diesem gegenüberliegenden Abstützabschnitt (14) umfasst, an dem die Abstützfläche (14b) ausgebildet ist.

11. Verfahren zur Befestigung eines Funktionselement (20) an einem Abschnitt (12) eines Werkstücks (10) und/oder zur Umformung eines Abschnitts des Werkstücks, insbesondere wobei das Werkstück ein Hohlprofil ist, mit einer Vorrichtung, insbesondere mit einer Vorrichtung gemäß einem der vorstehenden Ansprüche, umfassend eine Stützeinrichtung (16) zur Abstützung des Werkstücks, wobei der Werkstückabschnitt eine der Stützeinrichtung zugewandte erste Oberfläche (12a) und eine der Stützeinrichtung abgewandte zweite Oberfläche aufweist,
wobei die Stützeinrichtung ein erstes Stützelement (16a) mit einer ersten Werkstückstützfläche (18a), die der ersten Oberfläche zugeordnet ist, und ein zweites Stützelement (16b) mit einer von der ersten Werkstückstützfläche weg weisenden zweiten Werkstückstützfläche (18b) umfasst, die einer Abstützfläche (14) zugeordnet ist, und
wobei das erste und das zweite Stützelement mittels einer Spreizeinrichtung (13, 62) derart relativ zueinander bewegbar sind, dass die erste und die zweite Werkstückstützfläche in einer Axialrichtung (A) voneinander weg bewegbar sind, insbesondere wobei sich die Axialrichtung senkrecht zu der ersten und/oder zweiten Werkstückstützfläche erstreckt,
mit den Schritten:
- Positionieren des Werkstücks und/oder der Stützeinrichtung derart, dass der Werkstückabschnitt benachbart der Werkstückstützfläche des ersten Stützelements angeordnet ist,
- Betätigung der Spreizeinrichtung, bis die erste Werkstückstützfläche - direkt oder indirekt - in Kontakt mit der ersten Oberfläche und die zweite Werkstückstützfläche - direkt oder indirekt - in Kontakt mit der Abstützfläche stehen, und
- Bewegen eines Stempels (26, 26') in Axialrichtung auf die zweite Oberfläche zu, um das Funktionselement an dem Werkstückabschnitt zu befestigen und/oder um den Werkstückabschnitt umzuformen oder Bewegen des Funktionselements mittels einer Setzeinrichtung (56) in Axialrichtung auf die zweite Oberfläche zu, um das Funktionselement an dem Werkstückabschnitt zu befestigen, insbesondere
wobei das Werkstück ein Hohlprofil (10) mit einem Hohlraum (13) ist, der abschnittsweise durch die erste Oberfläche (12) und eine dritte Oberfläche (14b), die ersten Oberfläche gegenüber liegt und die die Abstützfläche umfasst, begrenzt ist.

12. Verfahren nach Anspruch 11,
wobei vor dem Schritt des Positionierens des Werkstücks (10) und/oder der Stützeinrichtung (16) eine Öffnung (24) in dem Werkstückabschnitt (12) erzeugt wird, die zur Aufnahme eines Abschnitts (22) des Funktionselements (10) vorgesehen ist, insbesondere
wobei das Werkstück (10) und/oder die Stützeinrichtung (16) derart positioniert werden, dass ein Abschnitt (22) des Funktionselements (22) mit der Öffnung (24) fluchtet und dass dieser Abschnitt durch die Betätigung der Spreizeinrichtung in die Öffnung eingebracht wird.

13. Verfahren nach Anspruch 11 oder 12,
wobei durch die Bewegung des Stempels (26) eine Umformung eines Abschnitts (12) des Funktionselements (20) bewirkt wird, insbesondere wobei dabei ein Hinterschnitt (28) erzeugt wird, der einem Auspressen des Funktionselements in Axialrichtung (A) entgegensteht.

14. Verfahren nach zumindest einem der Ansprüche 11 bis 13,
wobei das Umformen des Werkstückabschnitts (12) ein Stanzen umfasst, durch das eine Öffnung in den Werkstückabschnitt erzeugt wird und/oder wobei das Funktionselement (20) selbststanzend in den Werkstückabschnitt (12) eingebracht wird.

15. Zusammenbauteil, hergestellt gemäß einem Verfahren nach einem der Ansprüche 11 bis 14, umfassend ein Hohlprofil (10), bevorzugt aus Aluminium oder Stahl, und zumindest ein Funktionselement (20), bevorzugt aus Stahl, das mittels eines Clinch-, Niet-, Einpress- oder Schweißprozesses an einem Abschnitt (12) des Hohlprofils befestigt ist, insbesondere wobei das Funktionselement (20) ein Mutterelement oder ein Bolzenelement ist.
